# EUROPEAN PATENT APPLICATION

(11) **EP 4 769 093 A1**
(43) Date of publication of application: **01.07.2026**
(21) Application number: 25219035.0
(22) Date of filing: 27.11.2025
(51) Int. Cl.: G06F 3/044

(54) **STRETCHABLE DISPLAY DEVICE AND TOUCH DISPLAY DEVICE**

(30) Priority: 24.12.2024 KR 20240195684
(71) Applicant: LG Display Co., Ltd., Seoul, 07336 (KR)
(72) Inventor: CHOI, Suk, 10845 Paju-si (KR); CHIN, Mi-Hyung, 10845 Paju-si (KR)
(74) Representative: Ter Meer Steinmeister & Partner

(57) **Abstract**

A stretchable display device and a touch display device are provided. The stretchable display device includes a display panel for displaying an image and a touch panel disposed over the display panel. The touch panel includes a first sensing line extending in a first direction and a second sensing line extending in a second direction. The first and second sensing lines have a chain shape in which a plurality of rings are connected to each other, allowing the sensing lines to accommodate deformation while maintaining electrical performance. This structure supports reliable touch detection when the display is stretched, bent, or otherwise deformed, and can be applied to various stretchable display configurations.

## Description

The present application claims priority to Korean Patent Application No. 10-2024-0195684 filed in the Republic of Korea on December 24, 2024.

### BACKGROUND

### Technical Field

The present disclosure relates to a display device, and more particularly, to a stretchable display device and a touch display device.

### Description of the Related Art

As the information society progresses, interest in displays that process and display a large amount of information has been increasing, and various types of displays have been developed.

Accordingly, in addition to a commonly known rectangular display, flexible display devices such as a bendable display device for gaming, a foldable display device capable of being folded and unfolded, and a rollable display device having optimal space utilization have been widely developed.

Recently, a stretchable display device, which is much more flexible than these flexible display devices, has been in the spotlight as a next-generation display.

The stretchable display device is a display that can freely transform the shape without distortion of a screen even when the size of the screen is increased, folded, or twisted. Unlike the bendable, foldable, or rollable display devices that may only be transformed in a specific area or direction, the stretchable display device is able to implement the ultimate free-form and is considered as the most suitable display for the era of the Internet of Things (IoT), 5G, and autonomous vehicles.

The stretchable display device can include a rigid portion in which a pixel is disposed and a soft portion in which a connection line connecting the pixels is disposed. The rigid portion may not be stretched, and the soft portion can be stretched.

Meanwhile, the stretchable display device can include a touch function. To do this, a touch panel for receiving an instruction of a user can be attached onto a display panel including the rigid portion and the soft portion and displaying an image.

### BRIEF SUMMARY

It is an object of the present invention to provide a stretchable display device that substantially obviates one or more of the problems due to limitations and disadvantages of the related art.

Moreover, it is an object of the present invention to provide a stretchable display device capable of preventing or minimizing damage

At least one of the above objects is solved by the features of the independent claim. Further developments are subject of the dependent claims, the description and the drawings.

In aspect of the present invention, a stretchable display device is provided. The stretchable display device includes a display panel configured to display an image; and a touch panel provided over the display panel and including a first sensing line of a first direction and a second sensing line of a second direction. The first and second sensing lines have a chain shape in which a plurality of rings are connected to each other.

In another aspect of the present invention, a touch display device is provided. The touch display device includes a display panel configured to display an image; and a touch panel provided over the display panel and including a sensing line. The sensing line has a double-lined structure. The double-lined structure may include two lines and at least one ring connected to at least one of the two lines. The sensing line and/or the double-lined structure may include a chain shape in which a plurality of rings are connected to each other.

In another aspect of the present invention, a display device is provided. The display device includes a display panel configured to display an image by way of a plurality of pixels. The display panel includes: a plurality of first areas arranged in a first direction and a second direction, wherein sub-pixels are provided in each first area; a plurality of second areas, each second area between adjacent first areas of the plurality of first areas in the first direction and in the second direction; and a third area between adjacent second areas of the plurality of the second areas in the first direction and in the second direction. The display device includes a touch panel provided over the display panel and including a first sensing line of the first direction and the second sensing line of a second direction. Each pixel of the plurality of pixels corresponds to a first area of a plurality of first areas. At least one of the first and second sensing lines is in at least one first area of the plurality of first areas.

A stretchable line may be provided in the second area. The stretchable line may have at least one curved part. The first and second sensing lines may have a chain shape in which a plurality of rings are connected to each other.

Each one of the stretchable display devices and the touch display device according to aspects of the present invention includes a touch function. The touch function is enabled by a touch panel including sensing lines, which may have a chain shape. The sensing lines may be positioned in a wave-like configuration when not stretched, and the sensing lines may flex when the display device is stretched. The sensing lines are configured to move with the stretching of the display device such that the touch panel will continue to operate during stretching.

Such a configuration enables improved touch sensitivity during stretching. Additionally, such a configuration reduces the risk of sensing lines cracking or breaking caused by strain during stretching, due to the flex that the sensing lines are capable of withstanding. Therefore, the display device may have an improved lifespan due to the reduction in cracking or breaking of the sensing lines.

Other features and aspects of the present disclosure can be realized and attained by the structure particularly pointed out in the written description, or derivable therefrom, as well as the appended drawings.

The stretchable display devices and/or the touch display device according to an aspect of the present invention may include one or more of the following features:

The first direction may cross the second direction. The first direction may be perpendicular to the second direction.

Each one of the first sensing line and the second sensing line may have a chain shape. The chain shape may include a plurality of rings which are connected to each other. That is, each ring may overlap at least partially with at least one of its predecessor ring and its successor ring. The chain shape may form at least one curved part. The chain shape may form a double-lined structure. The double-lined structure may be or include the chain shape. The plurality of rings may have an elongated shape in direction of the respective first and/or second sensing line. Each ring may be stretched in direction of the respective first and/or second sensing line.

The display panel may include a plurality of first areas arranged in the first direction and/or the second direction. At least one first area, preferably each first area may include at least three sub-pixels, preferably four sub-pixels. The display panel may include a plurality of second areas. Each second area may be disposed between adjacent first areas of the plurality of first areas in the first direction and/or in the second direction. The display panel may include a third area between adjacent second areas of the plurality of the second areas in the first direction and/or in the second direction.

The first sensing line may include at least one first sensing electrode. The second sensing line may include at least one second sensing electrode. At least one of the first sensing electrode and the second sensing electrode may be in at least one first area of the plurality of first areas. At least one of the first sensing electrode and the second sensing electrode may have the chain shape.

The first sensing line may include a bridge electrode connected to a first sensing electrode of the at least one first sensing electrode. The bridge electrode may be disposed on a different layer from each of the at least one first and at least one second sensing electrodes. The first sensing line may include at least two first sensing electrodes in at least one first area of the plurality of first areas. The bridge electrode may be configured to connect two first sensing electrodes of the at least two sensing electrodes.

The first sensing line may include a first sensing line portion. The second sensing line may include a second sensing line portion. The first sensing line portion may be disposed in a second area of the plurality of second areas, in particular in the second area adjacent to the first area in the first direction. The first sensing line portion may extend into the first direction. The second sensing line portion may be disposed in a second area of the plurality of second areas, in particular in the second area adjacent to the first area in the second direction. The second sensing line portion may extend into the second direction.

At least one, preferably each one, of the first and second sensing line portions may have at least one curved part. The first sensing line and/or the second sensing line may have a curved part.

A first sensing electrode of the at least one first sensing electrode may be disposed in a first area of the plurality of first areas. A second sensing electrode of the at least one second sensing electrode may be disposed in the first area of the plurality of first areas. The at least one first sensing electrode may be disposed on each sub-pixel of the first area. The at least one second sensing electrode may be disposed between adjacent sub-pixels of the first area. The at least one second sensing electrode may be disposed between adjacent first sensing electrodes of the at least one first sensing electrode.

The at least one first sensing electrode and the at least one second sensing electrode may be disposed in different first areas of the plurality of first areas. The first sensing line may include a bridge electrode. The second sensing line may include a sensing line portion. A first sensing electrode of the at least one first sensing electrode and the bridge electrode may alternate in the plurality of first areas in the first direction. A second sensing electrode of the at least one second sensing electrode and the sensing line portion may alternate in the plurality of first areas in the second direction.

The at least one first sensing electrode may be disposed in the third area. The at least one second sensing electrode may be disposed in the plurality of first areas.

The at least one first sensing electrode may be disposed in each of the plurality of first areas, the plurality of second areas, and the third area. The at least one second sensing electrode may be disposed between the third area and a first area of the plurality of first areas adjacent to the third area in a diagonal direction or between second areas adjacent in the diagonal direction of the plurality of second areas.

First, second, third, and fourth sub-pixels may be provided in each first area of the plurality of first areas. Each first area of the plurality of first areas may include a first sub-pixel, a second sub-pixel, a third sub-pixel and a fourth sub-pixel. The second sub-pixel may be adjacent to the fourth sub-pixel in the first direction. The first sub-pixel may be adjacent to the second sub-pixel in the second direction. The at least one first sensing electrode may be disposed on each of the second and fourth sub-pixels. The at least one second sensing electrode may be disposed on each of the first and third sub-pixels. Each of the first, second, third, and fourth sub-pixels may have a circular shape.

The at least one first sensing electrode (232) and the at least one second sensing electrode may be provided in the plurality of second areas and the third area.

A stretchable line may be provided in the second area. The stretchable lines may be configured to connect adjacent pixels of the display panel. The stretchable line may have at least one curved part. The plurality of first areas may form a matrix. The plurality of first areas may be arranged in a plurality of rows and a plurality of lines.

Optionally, the first and second sensing lines are not provided in the third area.

The display panel may include a plurality of unit areas. Each unit area may correspond to a pixel of the display panel. One of the at least one first sensing electrode and one of the at least one second sensing electrode may be disposed in the unit area. Each unit area may include one of the at least one first sensing electrode and one of the at least one second sensing electrode.

The first sensing line may include a bridge electrode. The second sensing line may include a sensing line portion. The bridge electrode and the sensing line portion of the second sensing line may be disposed in a second area of the plurality of second areas between the third area and an adjacent third area in the first direction and/or between adjacent first areas of the plurality of first areas in the second direction.

At least one of the at least one first sensing electrode and the at least one second sensing electrode may have a polygonal shape.

The bridge electrode may comprise at least one ring.

It is to be understood that both the foregoing general description and the following detailed description are example and explanatory and are intended to provide further explanation of the inventive concepts as claimed.

### BRIEF DESCRIPTION OF THE SEVERAL VIEWS OF THE DRAWINGS

The accompanying drawings, which are included to provide a further understanding of the disclosure and which are incorporated in and constitute a part of this application, illustrate embodiments of the disclosure and together with the description serve to explain various principles of the disclosure. In the drawings:
FIG. 1 is a schematic plan view of a display panel of a stretchable display device according to embodiments of the present disclosure;
FIG. 2 is a schematic cross-sectional view of a display panel of a stretchable display device according to the embodiments of the present disclosure;
FIG. 3 is a view schematically illustrating a sensing line of a touch panel of a stretchable display device according to the embodiments of the present disclosure;
FIG. 4 is a schematic plan view of a touch panel of a stretchable display device according to a first embodiment of the present disclosure;
FIG. 5 is a schematic plan view enlarging a part of the touch panel of the stretchable display device according to the first embodiment of the present disclosure;
FIG. 6 is a cross-sectional view corresponding to line II-II' of FIG. 5;
FIG. 7 is a schematic plan view of a touch panel of a stretchable display device according to a second embodiment of the present disclosure;
FIG. 8 is a schematic plan view enlarging a part of the touch panel of the stretchable display device according to the second embodiment of the present disclosure;
FIG. 9 is a schematic plan view of a touch panel of a stretchable display device according to a third embodiment of the present disclosure;
FIG. 10 is a schematic plan view enlarging a part of the touch panel of the stretchable display device according to the third embodiment of the present disclosure;
FIG. 11 is a schematic plan view of a touch panel of a stretchable display device according to a fourth embodiment of the present disclosure;
FIG. 12 is a schematic plan view enlarging a part of the touch panel of the stretchable display device according to the fourth embodiment of the present disclosure;
FIG. 13 is a schematic plan view of a touch panel of a stretchable display device according to a fifth embodiment of the present disclosure; and
FIG. 14 is a schematic plan view of a touch panel of a stretchable display device according to a sixth embodiment of the present disclosure.

### DETAILED DESCRIPTION

Advantages and features of the present disclosure and methods for achieving them will be made clear from embodiments described in detail below with reference to the accompanying drawings.

The shapes, sizes, dimensions (e.g., length, width, height, thickness, radius, diameter, area, etc.), ratios, angles, number of elements, and the like illustrated in the accompanying drawings for describing the embodiments of the present disclosure are merely examples, and the present disclosure is not limited thereto.

A dimension including size and a thickness of each component illustrated in the drawing are illustrated for convenience of description, and the present disclosure is not limited to the size and the thickness of the component illustrated, but it is to be noted that the relative dimensions including the relative size, location, and thickness of the components illustrated in various drawings submitted herewith are part of the present disclosure.

Further, in the following description of the present disclosure, when a detailed description of a known related art is determined to unnecessarily obscure the gist of the present disclosure, the detailed description thereof will be omitted herein or can be briefly discussed.

When terms such as "including," "having," "comprising" and the like mentioned in this disclosure are used, other parts can be added unless the term "only" is used herein.

Further, when a component is expressed as being singular, being plural is included unless otherwise specified.

In analyzing a component, an error range is interpreted as being included even when there is no explicit description.

In describing a positional relationship, for example, when a positional relationship of two parts/layers is described as being "over," "on," "above," "below," "under," "next to," or the like, one or more other parts/layers can be provided between the two parts/layers, unless the term "immediately" or "directly" is used therewith.

In describing a temporal relationship, for example, when a temporal predecessor relationship is described as being "after," "subsequent," "next to," "prior to," or the like, unless the term "immediately" or "directly" is used, cases that are not continuous or sequential can also be included.

As used herein, the terms "connected" and "coupled" are intended to have the broadest possible meaning. Specifically, the phrase "A is connected to B" encompasses both a direct connection-where no intervening components or elements are present-and an indirect connection, where one or more intermediate components or elements exist between A and B. In other words, "A is connected to B" includes both direct physical or electrical coupling and indirect coupling through one or more intervening components. Unless explicitly stated otherwise, these terms do not require direct physical or electrical contact. The term "coupled" and "in contact" should be interpreted in the same manner. For example, the term "in contact with," as used herein, encompasses both "indirect contact" and "direct contact." Accordingly, when the phrase "A is in contact with B" is used, it implies that other components can be present between A and B, unless explicitly specified as "A is in direct contact with B."

Although the terms first, second, and the like are used to describe various components, these components are not substantially limited by these terms. These terms are used only to distinguish one component from another component, and may not define any order or sequence. Therefore, a first component described below can substantially be a second component within the technical spirit of the present disclosure.

Features of various embodiments of the present disclosure can be partially or entirely united or combined with each other, technically various interlocking and driving are possible, and each of the embodiments can be independently implemented with respect to each other or implemented together in a related relationship. Further, the term "can" fully encompasses all the meanings and coverages of the term "may" and vice versa.

Hereinafter, example embodiments of the present disclosure will be described in detail with reference to accompanying drawings. All the components of each display device according to all embodiments of the present disclosure are operatively coupled and configured.

A stretchable display device according to one or more embodiments of the present disclosure can include a display panel and a touch panel on the display panel. The display panel can include a plurality of pixels and implement an image. The touch panel can include a plurality of transmitter lines and a plurality of receiver lines crossing each other and can detect a touch from a change in capacitance between the plurality of transmitter lines and the plurality of receiver lines.

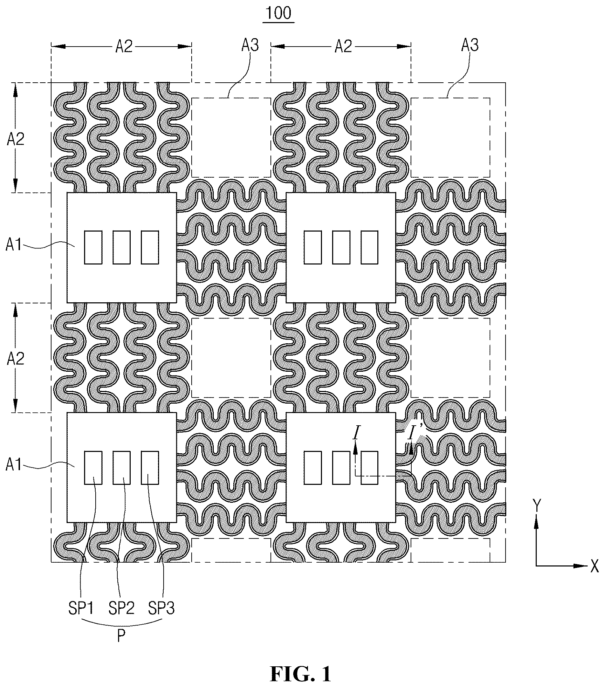

A planar configuration of the display panel of the stretchable display device will be described with reference to FIG. 1.

FIG. 1 is a schematic plan view of a display panel of a stretchable display device according to embodiments of the present disclosure.

In FIG. 1, the display panel 100 of the stretchable display device according to the embodiment of the present disclosure can be stretched in a first direction X and/or a second direction Y. The display panel 100 can include first, second, and third areas A1, A2, and A3.

Here, the first area A1 can be a rigid portion, and the second and third areas A2 and A3 can be a soft portion. The first area A1 may not be stretched, and the second and third areas A2 and A3 can be stretched.

The first area A1 can be provided in the form of an island, and a plurality of first areas A1 can be disposed to be spaced apart from each other along the first direction X and the second direction Y. The first areas A1 can form a matrix. For example, the first area A1 can have a substantially rectangular shape.

A pixel P including a plurality of sub-pixels SP1, SP2, and SP3 can be provided in each first area A1. For example, first, second, and third sub-pixels SP1, SP2, and SP3 can be provided in each first area A1, and the first, second, and third sub-pixels SP1, SP2, and SP3 can be red, green, and blue sub-pixels, respectively.

The first, second, and third sub-pixels SP1, SP2, and SP3 can be sequentially arranged in the first direction X and can have a rectangular shape.

Each of the first, second, and third sub-pixels SP1, SP2, and SP3 can include a light-emitting element, at least one thin film transistor, and at least one capacitor.

The second area A2 can be disposed between adjacent first areas A1 in the first direction X and between adjacent first areas A1 in the second direction Y. A stretchable line that is a connection line connecting adjacent pixels P can be provided in the second area A2. The stretchable line can include a plurality of voltage lines such as a gate line, a data line, a high potential line, a low potential line, an emission line, a reference voltage line, and so on.

The stretchable line can have at least one curved part. For example, the stretchable line can have a wave structure of alternating vertices in opposite directions or repeating peaks and valleys.

However, embodiments of the present disclosure are not limited thereto. The stretchable line can have various structures. For example, in other embodiments, the stretchable line can have an omega structure in which two omega shapes are connected to each other, among other possibilities. The omega shape can include at least one curved part and at least one straight part, and the straight part can be disposed substantially parallel to an extension direction of the stretchable line.

The third area A3 can be disposed between adjacent second areas A2 in the first direction X and between adjacent second areas A2 in the second direction Y. No line or electrode may be provided in the third area A3.

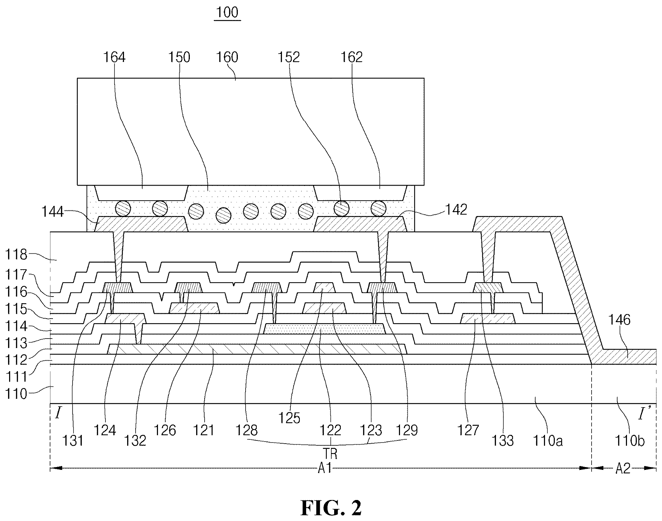

A cross-sectional configuration of the display panel 100 of the stretchable display device will be described with reference to FIG. 2.

FIG. 2 is a schematic cross-sectional view of a display panel of a stretchable display device according to the embodiments of the present disclosure and shows a cross-section corresponding to line I-I' of FIG. 1.

Referring to FIG. 2, the display panel 100 of the stretchable display device according to the embodiments of the present disclosure can include a base substrate 110. The base substrate 110 can be provided in the first area A1 and the second area A2 and may not be provided in the third area A3.

The base substrate 110 can include a first base portion 110a and a second base portion 110b. The first base portion 110a can be disposed to correspond to the first area A1, and the second base portion 110b can be disposed to correspond to the second area A2.

The first base portion 110a can be provided in a plate shape in a display area and can serve to support and protect components of a plurality of sub-pixels SP1, SP2, and SP3. The first base portion 110a can be plural, and the plurality of first base portions 110a can be spaced apart from each other in the first direction X and the second direction Y.

The second base portion 110b can be provided between the first base portions 110a adjacent to each other in each of the first direction X and the second direction Y. The second base portion 110b can include at least one curved part and can serve to support and protect a stretchable line 146. The second base portion 110b can have substantially the same shape as the stretchable line 146.

The first and second base portions 110a and 110b can be connected to each other and provided as one-body.

Although not shown in the figure, a first flexible substrate formed of a soft matter or soft material can be provided under the base substrate 110. The first flexible substrate can be attached to a bottom surface of the base substrate 110 by a first adhesive layer.

The base substrate 110 can be formed of a rigid material having lower flexibility than the soft material of the first flexible substrate. For example, the base substrate 110 can be formed of a polyimide (PI) resin or epoxy resin, among others.

The base substrate 110 can have relatively high elastic modulus, and the elastic modulus of the base substrate 110 can be higher than the elastic modulus of the first flexible substrate. For example, the elastic modulus of the base substrate 110 can be more than 1,000 times higher than the elastic modulus of the first substrate, but embodiments of the present disclosure are not limited thereto.

On the other hand, the first flexible substrate can be formed of a soft matter or soft material with bending or stretching properties. For example, the first flexible substrate can be formed of silicone rubber such as polydimethylsiloxane (PDMS), elastomer such as polyurethane (PU), or styrene butadiene block copolymer such as styrene butadiene styrene (SBS), among others.

The first flexible substrate can have relatively low elastic modulus, that is, Young's modulus, and can have a relatively high ductile breaking rate. Here, the elastic modulus is a value representing the rate of deformation relative to the stress applied to an object. If the elastic modulus is relatively high, the hardness can be relatively high. In addition, the ductile breaking rate refers to the elongation rate at the point when the stretched object is broken or cracked.

For example, the first flexible substrate can have the elastic modulus of several MPa to hundreds of MPa and the ductile breaking rate of about 100% or more. In addition, the first flexible substrate can have a thickness of about 10 µm to about 1 mm. However, embodiments of the present disclosure are not limited thereto.

Further, the first adhesive layer can be formed of an acryl-based, silicon-based, or urethane-based adhesive. For example, the first adhesive layer can be optically clear adhesive (OCA) that is formed and attached in the form of a film or optically clear resin (OCR) that is cured after applying a liquid material.

Next, a first buffer layer 111, which is a first insulation layer, can be provided on the base substrate 110. The first buffer layer 111 can block permeation of moisture or oxygen from the outside to protect the components of the plurality of sub-pixels SP1, SP2, and SP3.

The first buffer layer 111 can be formed as a single layer or multiple layers of an inorganic insulating material. For example, the inorganic insulating material of the first buffer layer 111 can include silicon nitride (SiNx), silicon oxide (SiOx), or silicon oxynitride (SiON).

In order to prevent damage of the first buffer layer 111 such as cracks due to stretching, the first buffer layer 111 can be removed in the second area A2 to substantially correspond to the first area A1. Thus, the first buffer layer 111 can be provided only over the first base portion 110a and may not be provided over the second base portion 110b. In addition, the first buffer layer 111 may not be provided in the third area A3.

However, embodiments of the present disclosure are not limited thereto. Alternatively, in other embodiments, the first buffer layer 111 may be omitted.

A light-shielding layer 121 can be provided on the first buffer layer 111 of the first area A1. The light-shielding layer 121 can be formed of a conductive material such as metal. For example, the light-shielding layer 121 can be formed of at least one of aluminum (Al), copper (Cu), molybdenum (Mo), titanium (Ti), chromium (Cr), nickel (Ni), tungsten (W), or an alloy thereof. The light-shielding layer 121 can have a single-layered structure or a multiple-layered structure.

A second buffer layer 112, which is a second insulation layer, can be provided on the light-shielding layer 121 and can be formed of an inorganic insulating material. The second buffer layer 112 can be disposed in the first area A1 and may not be disposed in the second area A2 and the third area A3.

A semiconductor layer 122 can be provided on the second buffer layer 112 of the first area A1. The semiconductor layer 122 can overlap the light-shielding layer 121, and the light-shielding layer 121 can block light incident on the semiconductor layer 122 and prevent or reduce the semiconductor layer 122 from deteriorating due to the light.

The semiconductor layer 122 can include a channel region at its central part and source and drain regions at both sides of the channel region. The semiconductor layer 122 can be formed of an oxide semiconductor material. Alternatively, the semiconductor layer 122 can be formed of polycrystalline silicon, and in this case, both ends of the semiconductor layer 122 may be doped with impurities.

A gate insulation layer 113, which is a third insulation layer, can be provided on the semiconductor layer 122 and can be formed of an inorganic insulating material. The gate insulation layer 113 can be disposed in the first area A1 and may not be disposed in the second area A2 and the third area A3.

A gate electrode 123 and a first connection electrode 124 can be provided on the gate insulation layer 113 of the first area A1 and can be formed of a conductive material such as metal.

The gate electrode 123 can overlap the semiconductor layer 122 and can be disposed to correspond to the central part of the semiconductor layer 122. Accordingly, the gate electrode 123 can also overlap the light-shielding layer 121.

The first connection electrode 124 can be spaced apart from the semiconductor layer 122 and can overlap the light-shielding layer 121. The first connection electrode 124 can be in contact with the light-shielding layer 121 through a contact hole provided in the second buffer layer 112 and the gate insulation layer 113.

A first interlayer insulation layer 114, which is a fourth insulation layer, can be provided on the gate electrode 123 and the first connection electrode 124 and can be formed of an inorganic insulating material. The first interlayer insulation layer 114 can be disposed in the first area A1 and may not be disposed in the second area A2 and the third area A3.

An auxiliary electrode 125, an auxiliary line 126, and a pad electrode 127 can be provided on the first interlayer insulation layer 114 of the first area A1 and can be formed of a conductive material such as metal. The auxiliary electrode 125 can overlap the gate electrode 123, the semiconductor layer 122, and the light-shielding layer 121. The auxiliary line 126 can overlap the light-shielding layer 121 and can be spaced apart from the gate electrode 123, the semiconductor layer 122, and the first connection electrode 124. The pad electrode 127 can be spaced apart from the light-shielding layer 121 and can be disposed around an edge of the first area A1 adjacent to the second area A2.

A second interlayer insulation layer 115, which is a fifth insulation layer, can be provided on the auxiliary electrode 125, the auxiliary line 126, and the pad electrode 127 and can be formed of an inorganic insulating material. The second interlayer insulation layer 115 can be disposed in the first area A1 and may not be disposed in the second area A2 and the third area A3.

A source electrode 128, a drain electrode 129, a second connection electrode 131, and a power line 132 can be provided on the second interlayer insulation layer 115 of the first area A1 and can be formed of a conductive material such as metal.

The source electrode 128 and the drain electrode 129 can be spaced apart from each other with the gate electrode 123 positioned therebetween and can be in contact with both ends of the semiconductor layer 122 through contact holes provided in the gate insulation layer 113 and the first and second interlayer insulation layers 114 and 115. The gate electrode 123 and the auxiliary electrode 125 can be disposed between the source electrode 128 and the drain electrode 129.

The semiconductor layer 122, the gate electrode 123, the source electrode 128, and the drain electrode 129 can constitute a thin film transistor TR. The thin film transistor TR can be a driving transistor.

The second connection electrode 131 can be spaced apart from the thin film transistor TR. The second connection electrode 131 can overlap the first connection electrode 124 and can be in contact with the first connection electrode 124 through a contact hole provided in the first and second interlayer insulation layers 114 and 115. In addition, the second connection electrode 131 can overlap the light-shielding layer 121.

The power line 132 can be spaced apart from the thin film transistor TR. The power line 132 can overlap the auxiliary line 126 and can be in contact with the auxiliary line 126 through a contact hole provided in the second interlayer insulation layer 115.

For example, the power line 132 can be a signal line supplying a low potential voltage. In this case, the power line 132 or the auxiliary line 126 can be connected to the light-shielding layer 121. That is, the low potential voltage can be supplied to the light-shielding layer 121.

Next, a third interlayer insulation layer 116, which is a sixth insulation layer, can be provided on the source electrode 128, the drain electrode 129, the second connection electrode 131, and the power line 132 and can be formed of an inorganic insulating material. The third interlayer insulation layer 116 can be disposed in the first area A1 and may not be disposed in the second area A2 and the third area A3.

An auxiliary pad 133 can be provided on the third interlayer insulation layer 116 of the first area A1 and can be formed of a conductive material such as metal. The auxiliary pad 133 can overlap the pad electrode 127 and can be in contact with the pad electrode 127 through a contact hole provided in the second and third interlayer insulation layer 115 and 116.

A passivation layer 117, which is a seventh insulation layer, can be provided on the auxiliary pad 133 and can be formed of an inorganic insulating material. The passivation layer 117 can be disposed in the first area A1 and may not be disposed in the second area A2 and the third area A3.

In this case, edges of the passivation layer 117 and the third interlayer insulation layer 116 adjacent to the second area A2 can be partially removed in the first area A1, thereby exposing a top surface of the second interlayer insulation layer 115.

The passivation layer 117 can be omitted.

A planarization layer 118, which is an eighth insulation layer, can be provided on the passivation layer 117. The planarization layer 118 can eliminate a step difference due to the layers thereunder and can have a substantially flat top surface. The planarization layer 118 can be formed of an organic insulating material such as photosensitive acrylic polymer (photo acryl).

The planarization layer 118 can be disposed in the first area A1 and may not be disposed in the second area A2 and the third area A3. Accordingly, the planarization layer 118 can be provided over the first base portion 110a and may not be provided over the second base portion 110b.

In the first area A1, the planarization layer 118 can be in contact with side surfaces of the third interlayer insulation layer 116 and the passivation layer 117 and can also be in contact with the exposed top surface of the second interlayer insulation layer 115.

A first electrode 142, a second electrode 144, and the stretchable line 146 can be provided on the planarization layer 118 of the first area A1 and can be formed of a conductive material such as metal.

The first electrode 142 can overlap the drain electrode 129 and can be in contact with the drain electrode 129 through a contact hole provided in the planarization layer 118, the passivation layer 117, and the third interlayer insulation layer 116. The second electrode 144 can overlap the second connection electrode 131 and can be in contact with the second connection electrode 131 through a contact hole provided in the planarization layer 118, the passivation layer 117, and the third interlayer insulation layer 116.

One end of the stretchable line 146 can be disposed on the planarization layer 118 of the first area A1. The one end of the stretchable line 146 can overlap the auxiliary pad 133 and can be in contact with the auxiliary pad 133 through a contact hole provided in the planarization layer 118 and the passivation layer 117. At this time, the one end of the stretchable line 146 can also overlap the pad electrode 127.

The stretchable line 146 can extend into and be provided in the second area A2. The stretchable line 146 can be in contact with top and side surfaces of the planarization layer 118 in the first area A1 and can be in contact with the top surface of the second base portion 110b in the second area A2. The stretchable line 146 can also be in contact with the side surfaces of the first buffer layer 111, the second buffer layer 112, the gate insulation layer 113, the first interlayer insulation layer 114, and the second interlayer insulation layer 115.

Meanwhile, although not shown in the figures, a bank layer can be further provided on the first electrode 142, the second electrode 144, and the stretchable line 146 in the first area A1. The bank layer can expose at least parts of the first electrode 142 and the second electrode 144 and can cover the one end of the stretchable line 146.

Next, an adhesive layer 150 can be provided on the first and second electrodes 142 and 144 of the first area A1. The adhesive layer 150 can be an anisotropic conductive film (ACF) including an insulating base member and a plurality of conductive balls 152 dispersed in the insulating base member.

When heat or pressure is applied to the adhesive layer 150, in an area where the heat or pressure is applied, the conductive balls 152 can be electrically connected, so that the adhesive layer 150 can have a conductive property, and in an area where the heat or pressure is not applied, the adhesive layer 150 can have an insulating property.

A light-emitting element 160 can be provided on the adhesive layer 150. The light-emitting element 160 can include a first element electrode 162 and a second element electrode 164.

Here, the first element electrode 162 can be a p-electrode, and the second element electrode 164 can be an n-electrode. The first element electrode 162 can be an anode, and the second element electrode 164 can be a cathode. However, embodiments of the present disclosure are not limited thereto.

Alternatively, in other embodiments, the first element electrode 162 can be an n-electrode, and the second element electrode 164 can be a p-electrode. In this case, the first element electrode 162 can be a cathode, and the second element electrode 164 can be an anode.

The light-emitting element 160 can be provided in the form of a micro light-emitting diode chip (micro LED chip or µLED chip) including the n-electrode, an n-type layer, an active layer, a p-type layer, and the p-electrode. The light-emitting element 160 can have a flip-chip structure in which the n-electrode and the p-electrode are provided on the same side (for example, a side facing the base substrate 110) and light is emitted through a side opposite to the side provided with the n-electrode and the p-electrode (for example, another side opposite to the side facing the base substrate 110).

However, embodiments of the present disclosure are not limited thereto. The light-emitting element 160 can have a lateral structure in which the n-electrode and the p-electrode are provided on the same side and light is emitted through the same side provided with the n-electrode and the p-electrode or can have a vertical structure in which the n-electrode and the p-electrode are provided on opposite sides, respectively.

The first element electrode 162 of the light-emitting element 160 can overlap the first electrode 142, and the second element electrode 164 of the light-emitting element 160 can overlap the second electrode 144. The first element electrode 162 can be electrically connected to the first electrode 142 through some conductive balls 152 of the adhesive layer 150, and the second element electrode 164 can be electrically connected to the second electrode 144 through other conductive balls 152 of the adhesive layer 150. Accordingly, the second element electrode 164 can be connected to the low potential voltage through the second electrode 144.

Meanwhile, although not shown in the figure, a second flexible substrate can be provided over the light-emitting element 160 and the stretchable line 146 and can be formed of a soft matter or soft material.

The second flexible substrate can be formed of the same material as the first flexible substrate. However, embodiments of the present disclosure are not limited thereto. In other embodiments, the second flexible substrate can be formed of a different material from the first flexible substrate.

The second flexible substrate can be attached to the light-emitting element 160 and the stretchable line 146 by a second adhesive layer. The second adhesive layer can be formed of the same material as the first adhesive layer. However, embodiments of the present disclosure are not limited thereto. In other embodiments, the second adhesive layer can be formed of a different material from the first adhesive layer.

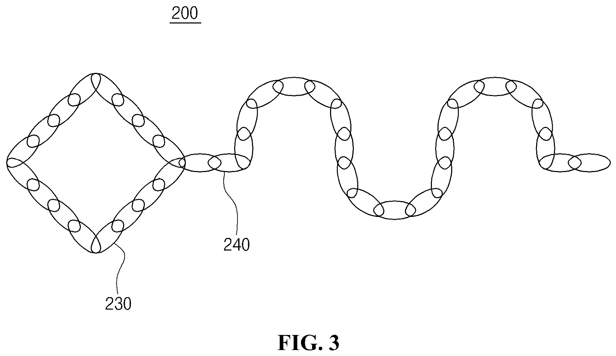

A touch panel can be disposed on the display panel 100 of the stretchable display device according to the embodiment of the present disclosure. A transmitter line and a receiver line, which are a sensing line of the touch panel, can have a chain shape. The sensing line of the touch panel of the stretchable display device according to the embodiment of the present disclosure will be described in detail with reference to FIG. 3.

FIG. 3 is a view schematically illustrating a sensing line of a touch panel of a stretchable display device according to the embodiments of the present disclosure.

Referring to FIG. 3, the touch panel 200 of the stretchable display device according to the embodiments of the present disclosure can include a sensing line, and the sensing line can have a chain shape in which a plurality of rings are connected to each other.

Specifically, the sensing line can include a sensing electrode 230 and a sensing line portion 240 connected to the sensing electrode 230.

The sensing electrode 230 can have a substantially rectangular shape. For example, the sensing electrode 230 can have a rhombic shape. However, embodiments of the present disclosure are not limited thereto. In other embodiments, the sensing electrode 230 can have a circular shape, an oval shape, and a polygonal shape such as a hexagon or an octagon.

The sensing line portion 240 can be connected to adjacent sensing electrodes 230. The sensing line portion 240 can include at least one curved part. For example, the sensing line portion 240 can have a wave structure and can include a plurality of wave shapes of repeated peaks and valleys. The wave structure may propagate into one of the first and second directions X, Y, respectively.

However, embodiments of the present disclosure are not limited thereto. In other embodiments, the sensing line portion 240 can have an omega structure including at least one omega shape. Alternatively, in other embodiments, the sensing line portion 240 can include only a straight part without a curved part.

Each of the sensing electrode 230 and the sensing line portion 240 of the stretchable display device according to the embodiments of the present disclosure can have a chain shape in which a plurality of rings are connected to each other. The sensing electrode 230 and the sensing line portion 240 of the chain shape can have a plurality of nodes, and surfaces of sensing electrode 230 and the sensing line portion 240 can have a substantially wave structure even if viewed from any direction.

Accordingly, when the stretchable display device is stretched, cracks in the sensing electrode 230 and the sensing line portion 240 can be prevented even if strain is applied to the touch panel 200.

On the other hand, the related art sensing line can have a flat or straight shape, and even if only 2% to 3% of deformation occurs, the surface resistance may increase by 10% or more, thereby reducing touch sensitivity. If the deformation occurs by 10% or more, cracks or breakages may occur.

In addition, since the sensing electrode 230 and the sensing line part 240 of the stretchable display device according to the embodiments of the present disclosure have a double-lined shape, the touch sensitivity can be increased by minimizing a change in resistance. That is, the sensing line may have a double-lined structure. In addition, the double-lined structure may include two lines and at least one ring connected to at least one of the two lines. For example, the at least one ring may be located between the two lines. In some aspects, the double-lined structure may be a chain shape in which a plurality of rings is connected to each other. However, it is not limited thereto, the double-lined structure may have other shapes except the chain shape.

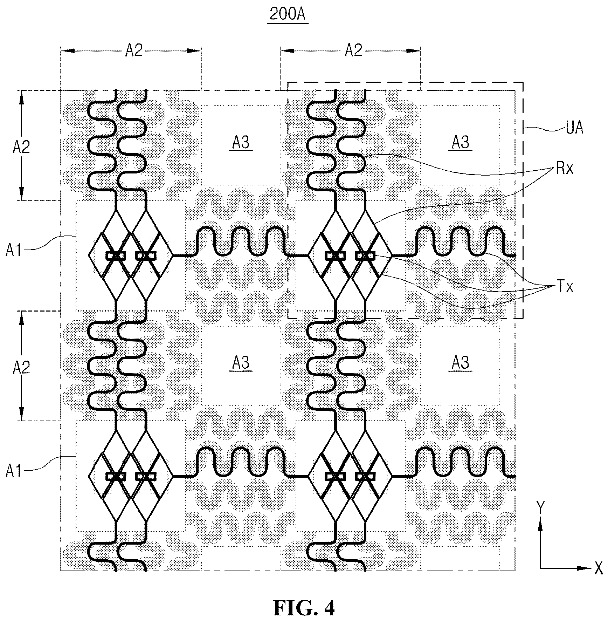

A configuration of a touch panel 200 of a stretchable display device according to a first embodiment of the present disclosure including the chain-shaped sensing line will be described in detail with reference to FIGS. 4 to 6.

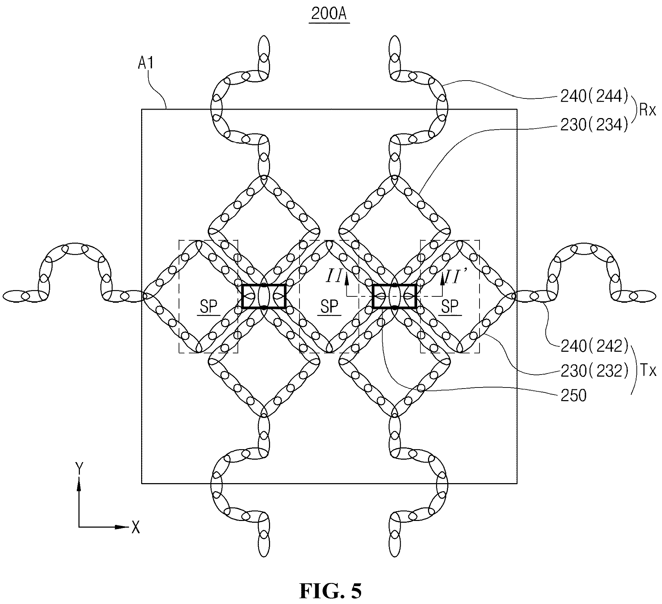

FIG. 4 is a schematic plan view of a touch panel of a stretchable display device according to a first embodiment of the present disclosure, and FIG. 5 is a schematic plan view enlarging a part of the touch panel of the stretchable display device according to the first embodiment of the present disclosure. FIG. 4 and FIG. 5 show a configuration of the display panel together.

Referring to FIG. 4 and FIG. 5, in the stretchable display device according to the first embodiment of the present disclosure, the touch panel 200A can be disposed on the display panel 100 including the first, second, and third areas A1, A2, and A3. The touch panel 200A can include a first sensing line Tx and a second sensing line Rx.

The first sensing line Tx, which is a transmitter line, can extend substantially in the first direction X. The second sensing line Rx, which is a receiver line, can extend substantially in the second direction Y and cross the first sensing line Tx. The first sensing line Tx and the second sensing line Rx can cross each other in an area corresponding to the first area A1 of the display panel 100.

Each of the first sensing line Tx and the second sensing line Rx can include the sensing electrode 230 and the sensing line portion 240. The sensing electrode 230 can have a substantially rectangular shape, and the sensing line portion 240 can include at least one curved part. The sensing electrode 230 can have a substantially polygonal shape.

In this case, the sensing electrode 230 can be disposed to correspond to the first area A1 of the display panel 100, and the sensing line portion 240 can be disposed to correspond to the second area A2 of the display panel 100. Meanwhile, no sensing line may be provided in an area corresponding to the third area A3 of the display panel 100.

Here, a unit area UA can be defined to correspond to each pixel P of the display panel 100. At this time, the unit area UA can include one first area A1, two second areas A2, and one third area A3.

In the touch panel 200A according to the first embodiment of the present disclosure, seven sensing electrodes 230 can be disposed in one unit area UA.

More specifically, the first sensing line Tx can include a first sensing electrode 232 and a first sensing line portion 242, and the second sensing line Rx can include a second sensing electrode 234 and a second sensing line portion 244.

The first sensing electrode 232 and the second sensing electrode 234 can be disposed to correspond to the first area A1 of the display panel 100. For example, three first sensing electrodes 232 and four second sensing electrodes 234 can be disposed to correspond to one first area A1.

Here, the first sensing electrodes 232 can be sequentially arranged in the first direction X and disposed to correspond to respective sub-pixels SP provided in the first area A1. The second sensing electrodes 234 can be disposed between the sub-pixels SP adjacent substantially in the first direction X. The second sensing electrodes 234 can be spaced apart from the first sensing electrodes 232 and can be disposed in the first direction X and the second direction Y substantially between the first sensing electrodes 232.

In addition, the first sensing line portion 242 can extend substantially in the first direction X and can be connected to the first sensing electrode 232. The first sensing line portion 242 can be disposed to correspond to the second area A2 of the display panel 100. In this case, the first sensing line portion 242 can be disposed in the second area A2 between the first areas A1 adjacent in the first direction X and may not be disposed in the second area A2 between the first areas A1 adjacent in the second direction Y.

On the other hand, the second sensing line portion 244 can extend substantially in the second direction Y and can be connected to the second sensing electrode 234. The second sensing line portion 244 can be disposed to correspond to the second area A2 of the display panel 100. In this case, the second sensing line portion 244 can be disposed in an area corresponding to the second area A2 between the first areas A1 adjacent in the second direction Y and may not be disposed in an area corresponding to the second area A2 between the first areas A1 adjacent in the first direction X.

The first and second sensing electrodes 232 and 234 and the first and second sensing line portions 242 and 244 can have a chain shape in which a plurality of rings are connected to each other.

Meanwhile, the first sensing line Tx can further include a bridge electrode 250. The bridge electrode 250 can be provided between the adjacent first sensing electrodes 232 and can connect the adjacent first sensing electrodes 232.

The bridge electrode 250 can include at least one ring. Alternatively, the bridge electrode 250 can have a chain shape in which a plurality of rings are connected to each other.

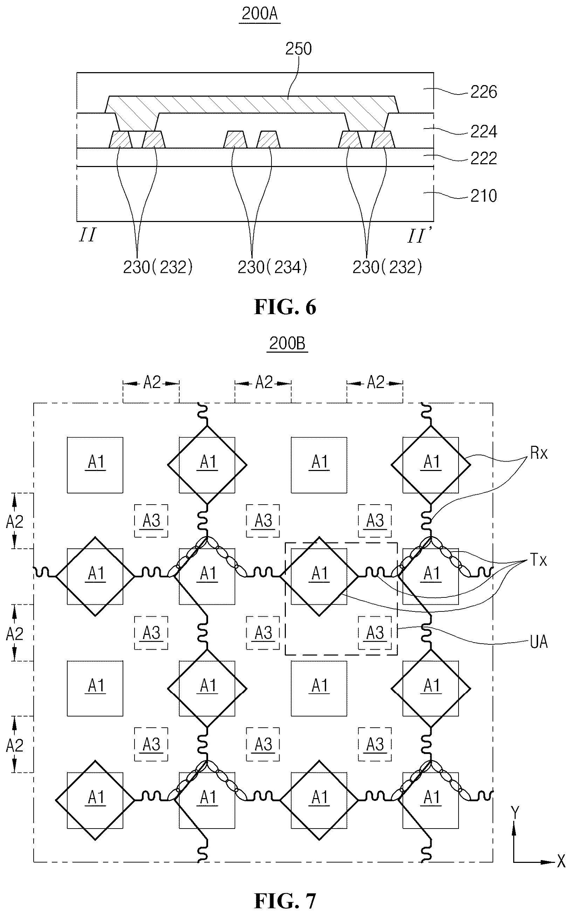

A cross-sectional configuration of the touch panel 200A of the stretchable display device according to the first embodiment of the present disclosure will be described in detail with reference to FIG. 6.

FIG. 6 is a cross-sectional view corresponding to line II-II' of FIG. 5 and will be described with reference to FIG. 4 and FIG. 5 together.

Referring to FIG. 6, the touch panel 200A of the stretchable display device according to the first embodiment of the present disclosure can include a touch substrate 210. For example, the touch substrate 210 can be formed of an organic insulating material such as polyimide (PI) or photosensitive acrylic polymer (photo acryl).

A first touch insulation layer 222 of an inorganic insulating material can be provided on the touch substrate 210. The first touch insulation layer 222 can be a touch buffer layer and can increase adhesion between the touch substrate 210 and the sensing line. For example, the inorganic insulating material can include silicon nitride (SiNx), silicon oxide (SiOx), silicon oxynitride (SiON).

The sensing electrode 230 can be provided on the first touch insulation layer 222. The sensing electrode 230 can be formed of a transparent conductive material such as indium tin oxide (ITO) or indium zinc oxide (IZO). Alternatively, the sensing electrode 230 can be formed of a metal material having relatively high conductivity such as aluminum (Al), gold (Au), or silver (Ag).

The sensing electrode 230 can include the first sensing electrode 232 and the second sensing electrode 234. The second sensing electrode 234 can be disposed between the adjacent first sensing electrodes 232. The first sensing electrode 232 and the second sensing electrode 234 can have a double-lined structure.

In addition, the sensing line portion 240 can be provided on the first touch insulation layer 222 and can be formed of the same material and on the same layer as the sensing electrode 230. The sensing line portion 240 can include the first sensing line portion 242 and the second sensing line portion 244. The first sensing line portion 242 can be connected to the first sensing electrode 232, and the second sensing line portion 244 can be connected to the second sensing electrode 234.

A second touch insulation layer 224 of an inorganic insulating material can be provided on the first and second sensing electrodes 232 and 234 and the first and second sensing line portions 242 and 244. The second touch insulation layer 224 can be a touch interlay insulation layer and can be provided between upper electrodes and lower electrodes of the sensing line.

The bridge electrode 250 can be provided on the second touch insulation layer 224. The bridge electrode 250 can be formed of a metal material having relatively high conductivity such as aluminum (Al), gold (Au), or silver (Ag).

The bridge electrode 250 can be in contact with the first sensing electrode 232 through a contact hole provided in the second touch insulation layer 224. Accordingly, the adjacent first sensing electrodes 232 can be electrically connected to each other through the bridge electrode 250.

A third touch insulation layer 226 of an inorganic insulating material can be provided on the bridge electrode 250. The third touch insulation layer 226 can be a touch protection layer and can cover and protect the sensing line.

Here, the first sensing electrode 232, the first sensing line portion 242, and the bridge electrode 250 can be connected to each other to constitute the first sensing line Tx. The second sensing electrode 234 and the second sensing line portion 244 can be connected to each other to constitute the second sensing line Rx.

As such, in the stretchable display device according to the first embodiment of the present disclosure, the plurality of first and second sensing electrodes 232 and 234 of the touch panel 200A can be provided to correspond to the first area A1 of the display panel 100, and the first sensing line portion 242 and the second sensing line portion 244 can be provided to correspond to the second area A2 of the display panel 100.

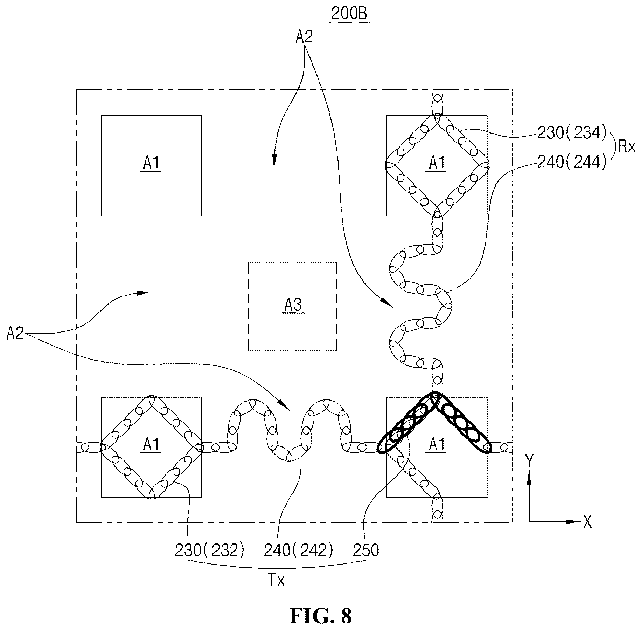

The layout of the sensing electrode and the sensing line portion of the present disclosure can vary. In a second embodiment of the present disclosure, one sensing electrode can be provided to correspond to the first area A1 of the display panel 100. Such a touch panel of a stretchable display device according to a second embodiment of the present disclosure will be described in detail with reference to FIG. 7 and FIG. 8.

FIG. 7 is a schematic plan view of a touch panel of a stretchable display device according to a second embodiment of the present disclosure, and FIG. 8 is a schematic plan view enlarging a part of the touch panel of the stretchable display device according to the second embodiment of the present disclosure. FIG. 7 and FIG. 8 show a configuration of the display panel together. The stretchable display device according to the second embodiment of the present disclosure has substantially the same or similar configuration as that of the first embodiment, except for the layout structure of the sensing line. The same parts as those of the first embodiment are designated by the same or similar reference signs, and explanation for the same parts may be shortened or omitted.

Referring to FIG. 7 and FIG. 8, the touch panel 200B of the stretchable display device according to the second embodiment of the present disclosure can include the first sensing line Tx extending substantially in the first direction X and the second sensing line Rx extending substantially in the second direction Y.

The first sensing line Tx can include the first sensing electrode 232, the first sensing line portion 242, and the bridge electrode 250, and the second sensing line Rx can include the second sensing electrode 234 and the second sensing line portion 244.

Each of the first sensing electrode 232 and the second sensing electrode 234 can be provided to correspond to the first area A1 of the display panel 100. Each of the first sensing line portion 242 and the second sensing line portion 244 can be provided to correspond to the second area A2 of the display panel 100. In addition, the second sensing line portion 244 can be further provided to correspond to the first area A1 of the display panel 100. The bridge electrode 250 can be provided to correspond to the first area A1 of the display panel 100. In this case, the bridge electrode 250 can partially overlap the second sensing line portion 244.

Here, the first sensing electrode 232 and the bridge electrode 250 can alternate each other to correspond to the first areas A1 arranged in the first direction X. The second sensing electrode 234 and the second sensing line portion 244 can alternate each other to correspond to the first areas A1 arranged in the second direction Y.

Meanwhile, the first sensing line portion 242 can be disposed in an area corresponding to the second area A2 between the first areas A1 with the first sensing electrode 232 and adjacent to each other in the first direction X. The first sensing line portion 242 may not be disposed in an area corresponding to the second area A2 between the first areas A1 with the first sensing electrode 232 and adjacent to each other in the second direction Y.

In addition, the second sensing line portion 244 can be disposed in an area corresponding to the second area A2 between the first areas A1 with the second sensing electrode 234 and adjacent to each other in the second direction Y. The second sensing line portion 244 may not be disposed in an area corresponding to the second area A2 between the first areas A1 with the second sensing electrode 234 and adjacent to each other in the second direction Y.

In the touch panel 200B according to the second embodiment of the present disclosure, one sensing electrode, that is, one first sensing electrode 232 or one second sensing electrode 234 can be disposed in one unit area UA. Accordingly, four sensing electrodes, that is, two first sensing electrodes 232 and two second sensing electrodes 234 can be disposed to correspond to nine unit areas UA (for example, the nine unit areas UA may include two unit areas UA in which two first sensing electrodes 232 adjacent to each other in the first direction X are located, two unit areas UA in which two second sensing electrodes 234 adjacent to each other in the second direction Y are located, one unit area UA in which the bridge electrode 250 partially overlaps the second sensing line portion 244, and four unit areas UA in which no sensing line is provided). Meanwhile, no sensing line may be provided in an area corresponding to the third area A3 of the display panel 100.

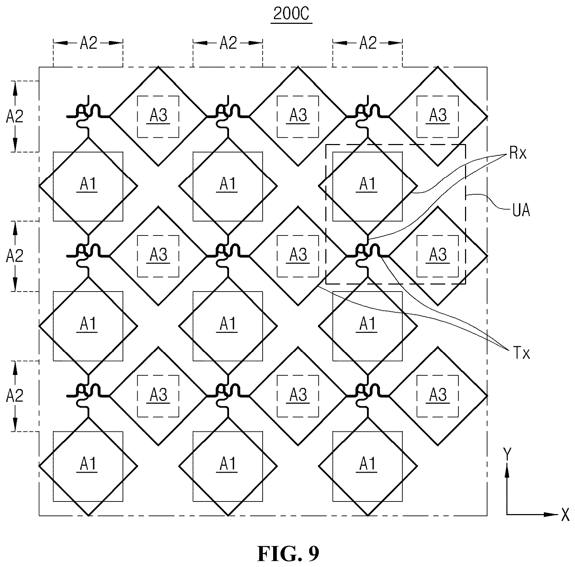

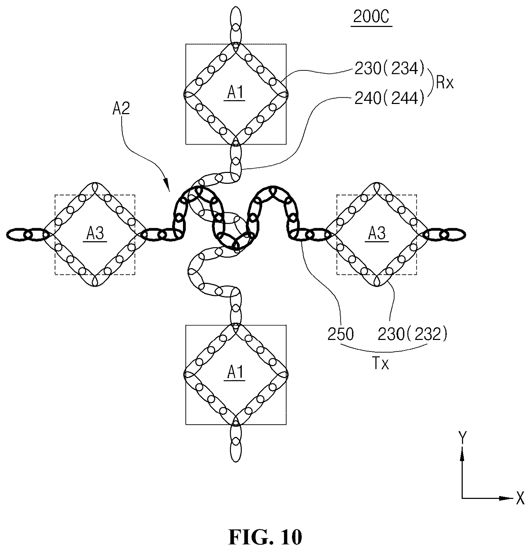

The sensing electrode of the present disclosure can be provided to correspond to the first area A1 and the third area A3 of the display panel 100. Such a touch panel of a stretchable display device according to a third embodiment of the present disclosure will be described in detail with reference to FIG. 9 and FIG. 10.

FIG. 9 is a schematic plan view of a touch panel of a stretchable display device according to a third embodiment of the present disclosure, and FIG. 10 is a schematic plan view enlarging a part of the touch panel of the stretchable display device according to the third embodiment of the present disclosure. FIG. 9 and FIG. 10 show a configuration of the display panel together. The stretchable display device according to the third embodiment of the present disclosure has substantially the same or similar configuration as that of the first and second embodiments, except for the layout structure of the sensing line. The same parts as those of the first and second embodiments are designated by the same or similar reference signs, and explanation for the same parts may be shortened or omitted.

Referring to FIG. 9 and FIG. 10, the touch panel 200C of the stretchable display device according to the third embodiment of the present disclosure can include the first sensing line Tx extending substantially in the first direction X and the second sensing line Rx extending substantially in the second direction Y.

The first sensing line Tx can include the first sensing electrode 232 and the bridge electrode 250, and the second sensing line Rx can include the second sensing electrode 234 and the second sensing line portion 244. That is, in the third embodiment of the present disclosure, the first sensing line Tx may not include the first sensing line portion.

The first sensing electrode 232 can be provided to correspond to the third area A3 of the display panel 100, and the second sensing electrode 234 can be provided to correspond to the first area A1 of the display panel 100. However, embodiments of the present disclosure are not limited thereto. In other embodiments, the first sensing electrode 232 can be provided to correspond to the first area A1 of the display panel 100, and the second sensing electrode 234 can be provided to correspond to the third area A3 of the display panel 100.

In addition, the bridge electrode 250 and the second sensing line portion 244 can be selectively provided to correspond to the second area A2 of the display panel 100 and can cross each other. Specifically, the bridge electrode 250 and the second sensing line portion 244 can be disposed in an area corresponding to the second area A2 between the adjacent third areas A3 in the first direction X and between the adjacent first areas A1 in the second direction Y and may not be disposed in an area corresponding to the second area A2 between the adjacent third areas A3 in the second direction Y and between the adjacent first areas A1 in the first direction X.

In the touch panel 200C according to the third embodiment of the present disclosure, two sensing electrodes, that is, one first sensing electrode 232 and one second sensing electrode 234 can be disposed in one unit area UA.

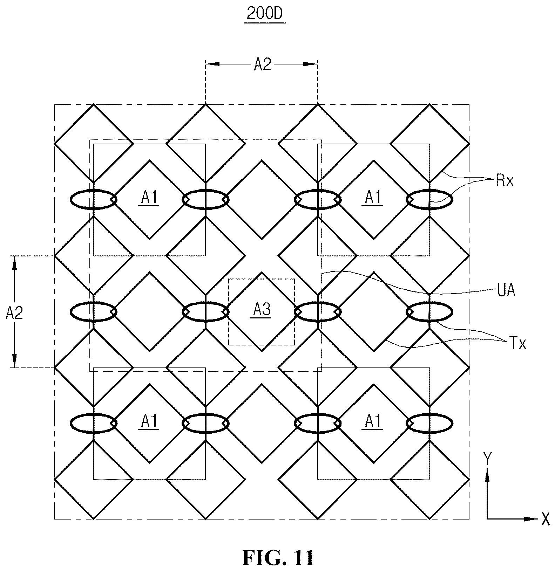

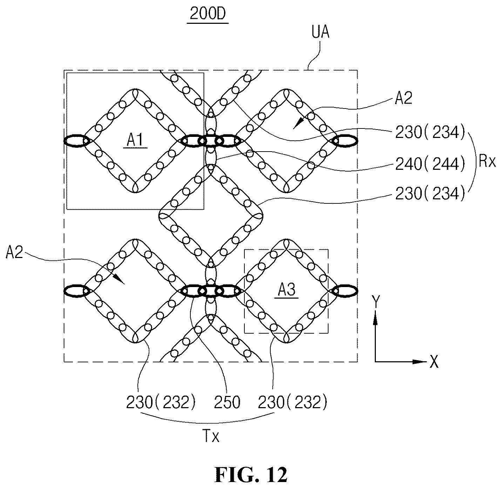

The sensing electrode of the present disclosure can be provided to correspond to all first, second, and third areas A1, A2, and A3 of the display panel 100. Such a touch panel of a stretchable display device according to a fourth embodiment of the present disclosure will be described in detail with reference to FIG. 11 and FIG. 12.

FIG. 11 is a schematic plan view of a touch panel of a stretchable display device according to a fourth embodiment of the present disclosure, and FIG. 12 is a schematic plan view enlarging a part of the touch panel of the stretchable display device according to the fourth embodiment of the present disclosure. FIG. 11 and FIG. 12 show a configuration of the display panel together. The stretchable display device according to the fourth embodiment of the present disclosure has substantially the same or similar configuration as that of the first, second, and third embodiments, except for the layout structure of the sensing line. The same parts as those of the first, second, and third embodiments are designated by the same or similar reference signs, and explanation for the same parts may be shortened or omitted.

Referring to FIG. 11 and FIG. 12, the touch panel 200D of the stretchable display device according to the fourth embodiment of the present disclosure can include the first sensing line Tx extending substantially in the first direction X and the second sensing line Rx extending substantially in the second direction Y.

The first sensing line Tx can include the first sensing electrode 232 and the bridge electrode 250, and the second sensing line Rx can include the second sensing electrode 234 and the second sensing line portion 244. That is, in the fourth embodiment of the present disclosure, the first sensing line Tx may not include the first sensing line portion.

The first sensing electrode 232 can be provided to correspond to each of the first, second, and third areas A1, A2, and A3 of the display panel 100, and the second sensing electrode 234 can be provided to correspond to an area between the first area A1 and the third area A3 adjacent in a diagonal direction crossing the first and second directions X and Y and between the second areas A2 adjacent in the diagonal direction.

In addition, the bridge electrode 250 and the second sensing line portion 244 can be provided to correspond to an area between the first area A1 and the second area A2 adjacent in the first direction X and between the second area A2 and the third area A3 adjacent in the first direction X and can cross each other. The bridge electrode 250 and the second sensing line portion 244 may not be disposed between the first area A1 and the second area A2 adjacent in the second direction Y and between the second area A2 and the third area A3 adjacent in the second direction Y.

However, embodiments of the present disclosure are not limited thereto. In other embodiments, the locations of the first sensing electrode 232 and the second sensing electrode 234 can be exchanged. That is, the second sensing electrode 234 can be provided to correspond to each of the first, second, and third areas A1, A2, and A3 of the display panel 100, and the first sensing electrode 232 can be provided to correspond to an area between the first area A1 and the third area A3 adjacent in the diagonal direction and between the second areas A2 adjacent in the diagonal direction.

In this case, the bridge electrode 250 and the second sensing line portion 244 can be provided to correspond to an area between the first area A1 and the second area A2 adjacent in the second direction Y and between the second area A2 and the third area A3 adjacent in the second direction Y and can cross each other. The bridge electrode 250 and the second sensing line portion 244 may not be disposed between the first area A1 and the second area A2 adjacent in the first direction X and between the second area A2 and the third area A3 adjacent in the first direction X.

In the touch panel 200D according to the fourth embodiment of the present disclosure, five sensing electrodes, that is, four first sensing electrodes 232 and one second sensing electrode 234 or one first sensing electrode 232 and four second sensing electrodes 234 can be disposed in one unit area UA. Accordingly, the number of sensing electrodes disposed in the unit area UA can increase, thereby improving the touch sensitivity.

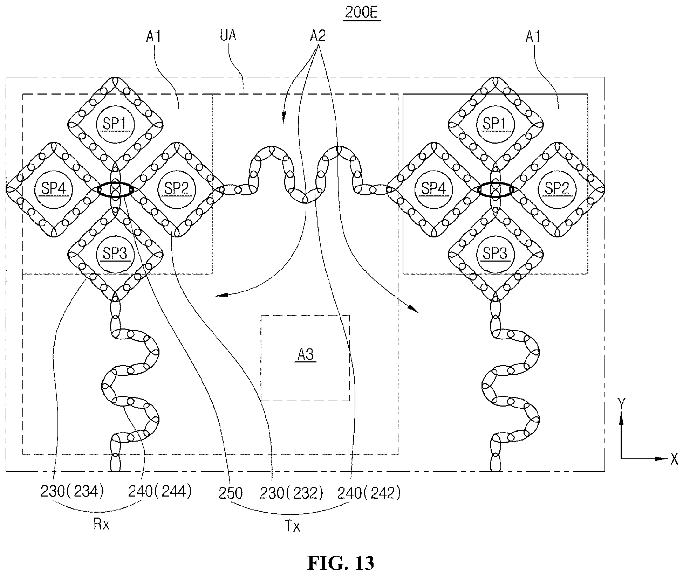

The number and shape of sub-pixels in which the light-emitting element is provided can vary. Such a touch panel of a stretchable display device according to a fifth embodiment of the present disclosure will be described in detail with reference to FIG. 13.

FIG. 13 is a schematic plan view of a touch panel of a stretchable display device according to a fifth embodiment of the present disclosure and shows a configuration of the display panel. The stretchable display device according to the fifth embodiment of the present disclosure has substantially the same or similar configuration as that of the first, second, third, and fourth embodiments, except for the number and shape of sub-pixels. The same parts as those of the first, second, third, and fourth embodiments are designated by the same or similar reference signs, and explanation for the same parts may be shortened or omitted.

Referring to FIG. 13, the touch panel 200E of the stretchable display device according to the fifth embodiment of the present disclosure can include the first sensing line Tx extending substantially in the first direction X and the second sensing line Rx extending substantially in the second direction Y.

The first sensing line Tx can include the first sensing electrode 232, the first sensing line portion 242, and the bridge electrode 250, and the second sensing line Rx can include the second sensing electrode 234 and the second sensing line portion 244.

The first sensing electrode 232 and the second sensing electrode 234 can be provided to correspond to the first area A1 of the display panel 100, and the first sensing line portion 242 and the second sensing line portion 244 can be provided to correspond to the second area A2 of the display panel 100. Meanwhile, no sensing line may be provided in an area corresponding to the third area A3 of the display panel 100.

In this case, the first and second sensing electrodes 232 and 234 can be disposed to correspond to respective sub-pixels SP1, SP2, SP3, and SP4 of the first area A1.

Specifically, a plurality of sub-pixels SP1, SP2, SP3, and SP4 can be provided in the first area A1 of the display panel 100. The plurality of sub-pixels SP1, SP2, SP3, and SP4 can include first, second, third, and fourth sub-pixels SP1, SP2, SP3, and SP4. For example, the first, second, third, and fourth sub-pixels SP1, SP2, SP3, and SP4 can be red, green, blue, and green sub-pixels, respectively, but embodiments of the present disclosure are not limited thereto.

The first, second, third, and fourth sub-pixels SP1, SP2, SP3, and SP4 can have a circular shape and can be sequentially disposed clockwise to thereby form a rectangle. Accordingly, the first and third sub-pixels SP1 and SP3 can be spaced apart from each other in the second direction Y, and the second and fourth sub-pixels SP2 and SP4 can be spaced apart from each other in the first direction X.

The light-emitting element can be provided in each of the first, second, third, and fourth sub-pixels SP1, SP2, SP3, and SP4 and can have a substantially circular shape.

The first sensing electrode 232 or the second sensing electrode 234 can be disposed to correspond to each of the first, second, third, and fourth sub-pixels SP1, SP2, SP3, and SP4. Specifically, the first sensing electrode 232 can be provided to correspond to each of the second and fourth sub-pixels SP2 and SP4, and the second sensing electrode 234 can be provided to correspond to each of the first and third sub-pixels SP1 and SP3.

In addition, the bridge electrode 250 can be provided between the adjacent first sensing electrodes 232 to connect the adjacent first sensing electrodes 232. The bridge electrode 250 can be disposed to correspond to the first area A1.

Meanwhile, the first sensing line portion 242 can be disposed an area corresponding to in the second area A2 between the adjacent first areas A1 in the first direction X, and the second sensing line portion 244 can be disposed in an area corresponding to the second area A2 between the adjacent first areas A1 in the second direction Y.

In the touch panel 200E according to the fifth embodiment of the present disclosure, four sensing electrodes, that is, two first sensing electrodes 232 and two second sensing electrodes 234 can be disposed in one unit area UA.

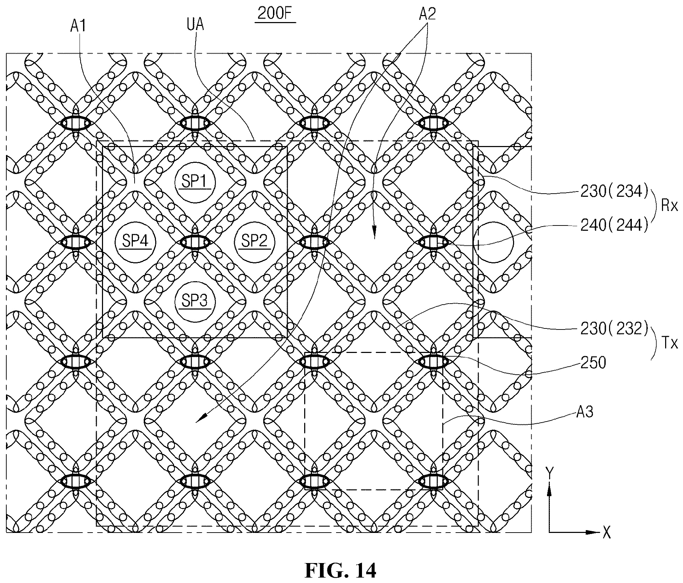

The sensing electrode of the present disclosure can be provided to correspond to the second area A2 and the third area A3 as well as the first area A1 of the display panel 100 in which the circular-shaped sub-pixels are provided. Such a touch panel of a stretchable display device according to a sixth embodiment of the present disclosure will be described in detail with reference to FIG. 14.

FIG. 14 is a schematic plan view of a touch panel of a stretchable display device according to a sixth embodiment of the present disclosure and shows a configuration of the display panel. The stretchable display device according to the sixth embodiment of the present disclosure has substantially the same or similar configuration as that of the first, second, third, fourth, and fifth embodiments, except for the layout structure of the sensing line. The same parts as those of the first, second, third, fourth, and fifth embodiments are designated by the same or similar reference signs, and explanation for the same parts may be shortened or omitted.

Referring to FIG. 14, the touch panel 200F of the stretchable display device according to the sixth embodiment of the present disclosure can include the first sensing line Tx extending substantially in the first direction X and the second sensing line Rx extending substantially in the second direction Y.

The first sensing line Tx can include the first sensing electrode 232 and the bridge electrode 250, and the second sensing line Rx can include the second sensing electrode 234 and the second sensing line portion 244. That is, in the sixth embodiment of the present disclosure, the first sensing line Tx may not include the first sensing line portion.

The first sensing electrode 232 and the second sensing electrode 234 can be provided to correspond to the first, second, and third areas A1, A2, and A3 of the display panel 100. The bridge electrode 250 can be provided between the adjacent first sensing electrodes 232 in the first direction X, and the second sensing line portion 244 can be provided between the adjacent second sensing electrodes 234 in the second direction Y.

In this case, four sensing electrodes, that is, two first sensing electrodes 232 and two second sensing electrodes 234 can be disposed in an area corresponding to each of the first area A1 and the third area A3. Additionally, five sensing electrodes, that is, one first sensing electrode 232 and four second sensing electrodes 234 or four first sensing electrode 232 and one second sensing electrode 234 can be disposed in an area corresponding to the second area A2.

In the touch panel 200F according to the sixth embodiment of the present disclosure, substantially eighteen sensing electrodes, that is, nine first sensing electrodes 232 and nine second sensing electrodes 234 can be disposed in one unit area UA. Accordingly, the number of sensing electrodes disposed in the unit area UA can increase, thereby improving the touch sensitivity.

In the stretchable display device, by implementing the sensing line of the touch panel in a chain shape in which a plurality of rings are connected to each other, cracks or breakages in the sensing line can be prevented even if strain is applied to the touch panel due to stretching. Accordingly, the power consumption can be reduced due to the improved lifetime, thereby achieving the low power consumption.

In addition, the change in resistance of the sensing line can be minimized, thereby improving the touch sensitivity.

Further, since the sensing electrode of the sensing line can have various shapes and layout structures, the degree of design freedom can be increased, and the touch sensitivity can be further improved by increasing the number of sensing electrodes.

As discussed above, the disclosed stretchable display device introduces sensing lines formed from a chain of interconnected rings, and in some embodiments a double lined structure, to achieve improved stretchability, crack resistance, and stable electrical performance under mechanical strain. Unlike conventional straight touch sensing traces, these chain based geometries distribute deformation, reduce changes in resistance, and maintain touch sensitivity even during substantial stretching, twisting, or expansion of the display.

The device further integrates these mechanically compliant sensing lines with a display architecture that includes rigid pixel islands, stretchable interconnect regions, and void areas. The specification provides several layout configurations that vary the placement of sensing electrodes within these regions and employ bridge electrodes on separate layers to connect chain shaped elements. These configurations allow the touch panel to continue functioning while the display undergoes deformation in multiple directions.

The chain shaped sensing lines, the double lined structures, the multilayer bridges, and the adaptable geometric layouts establish a coordinated stretchable touch display system in which both pixel driving lines and touch sensing lines use mechanically resilient curved or ring based structures. This approach increases operational lifetime, reduces power consumption, and enhances touch sensitivity and mechanical reliability compared to prior stretchable display structures.

It will be apparent to those skilled in the art that various modifications and variations can be made in the display device and the method of manufacturing the same of the present disclosure.

## Claims

1. A stretchable display device comprising:
a display panel (100) configured to display an image; and
a touch panel (200A, 200B, 200C, 200D, 200E, 200F) provided over the display panel (100) and including a first sensing line (Tx) of a first direction (X) and a second sensing line (Rx) of a second direction (Y),
wherein the first and second sensing lines (Tx, Rx) have a chain shape in which a plurality of rings are connected to each other.

2. The stretchable display device of claim 1, wherein the display panel (100) includes:
a plurality of first areas (A1) arranged in the first direction (X) and the second direction (Y), wherein sub-pixels (SP1, SP2, SP3, SP4) are provided in each first area;
a plurality of second areas (A2), each second area between adjacent first areas of the plurality of first areas (A1) in the first direction (X) and in the second direction (Y); and
a third area (A3) between adjacent second areas of the plurality of the second areas (A2) in the first direction (X) and in the second direction (Y).

3. The stretchable display device of claim 2, wherein the first sensing line (Tx) includes at least one first sensing electrode (232) and the second sensing line (Rx) includes at least one second sensing electrode (234), and
wherein at least one of the first and second sensing electrodes (232, 234) is in at least one first area of the plurality of first areas (A1),
wherein preferably at least one of the at least one first sensing electrode (232) and the at least one second sensing electrode (234) has a polygonal shape.

4. The stretchable display device of claim 3, wherein the first sensing line (Tx) further includes a bridge electrode (250) connected to a first sensing electrode of the at least one first sensing electrode (232), and
wherein the bridge electrode (250) is on a different layer from each of the at least one first and at least one second sensing electrodes (232, 234),
wherein preferably the bridge electrode comprises at least one ring.

5. The stretchable display device of any one of the claims 2 to 4, wherein the first and second sensing lines (Tx, Rx) further include first and second sensing line portions (242, 244), respectively, and
wherein the first and second sensing line portions (242, 244) are in the plurality of second areas (A2).

6. The stretchable display device of claim 5, wherein the first and second sensing line portions (242, 244) each have at least one curved part.

7. The stretchable display device of any one of the claims 3 to 6, wherein a first sensing electrode of the at least one first sensing electrode (232) and a second sensing electrode of the at least one second sensing electrode (234) are in a first area of the plurality of first areas (A1),
wherein preferably the at least one first sensing electrode (232) is on each sub-pixel (SP1, SP2, SP3, Sp4), and the at least one second sensing electrode (234) is between adjacent sub-pixels (SP1, SP2, SP3, SP4).

8. The stretchable display device of any one of the claims 3 to 6, wherein the at least one first sensing electrode (232) and the at least one second sensing electrode (234) are in different first areas of the plurality of first areas (A1),
wherein preferably:
the first sensing line (Tx) further includes a bridge electrode (250), and the second sensing line (Rx) further includes a sensing line portion (240),
a first sensing electrode of the at least one first sensing electrode (232) and the bridge electrode (250) alternate in the plurality of first areas (A1) in the first direction (X), and
a second sensing electrode of the at least one second sensing electrode (234) and the sensing line portion (240) alternate in the plurality of first areas (A1) in the second direction (Y).

9. The stretchable display device of any one of the claims 3 to 6, wherein the at least one first sensing electrode (232) is in the third area (A3), and the at least one second sensing electrode (234) is in the plurality of first areas (A1).

10. The stretchable display device of any one of the claims 3 to 6, wherein the at least one first sensing electrode (232) is in each of the plurality of first areas (A1), the plurality of second areas (A2), and the third area (A3), and
wherein the at least one second sensing electrode (234) is between the third area (A3) and an adjacent first area of the plurality of first areas (A1) in a diagonal direction or between second areas adjacent in the diagonal direction of the plurality of second areas (A2).

11. The stretchable display device of any one of the claims 3 to 10, wherein first, second, third, and fourth sub-pixels (SP1, SP2, SP3, SP4) are provided in each first area of the plurality of first areas (A1),
wherein the at least one first sensing electrode (232) is on each of the second and fourth sub-pixels (SP2, SP4), the second and fourth sub-pixels (SP2, SP4) being adjacent to each other in the first direction (X), and the at least one second sensing electrode (234) is on each of the first and third sub-pixels (SP1, SP3), the first and third sub-pixels (SP1, SP3) being adjacent to each other in the second direction (Y), and
wherein preferably each of the first, second, third, and fourth sub-pixels has a circular shape.

12. The stretchable display device of claim 11, wherein the at least one first sensing electrode (232) and the at least one second sensing electrode (234) are further provided in the plurality of second areas (A2) and the third area (A3).

13. The stretchable display device of any one of the claims 2 to 12, wherein a stretchable line (146) is provided in the plurality of second areas (A2), and the stretchable line (146) has at least one curved part; and/or
wherein the plurality of first areas (A1) forms a matrix.

14. The stretchable display device of any one of the claims 8 to 13, wherein one of the at least one first sensing electrode (232) and one of the at least one second sensing electrode (234) is in a unit area (UA), the unit area (UA) corresponding to a pixel (P) of the display panel (100).

15. The stretchable display device of any one of the claims 9 to 14, wherein the first sensing line (Tx) further includes a bridge electrode (250), and the second sensing line (Rx) further includes a sensing line portion (240), and
wherein the bridge electrode (250) and the sensing line portion (240) of the second sensing line (Rx) are in a second area of the plurality of second areas (A2) between the third area (A3) and an adjacent third area (A3) in the first direction (X) and between adjacent first areas of the plurality of first areas (A1) in the second direction (Y).
